# EUROPÄISCHE PATENTSCHRIFT

(11) **EP 0 966 826 B1**
(45) Veröffentlichungstag und Bekanntmachung des Hinweises auf die Patenterteilung: **19.05.2004**
(21) Anmeldenummer: 98922599.0
(22) Anmeldetag: 12.03.1998
(51) Int. Cl.: H04M 1/00

(54) **EINGABEVORRICHTUNG FÜR FUNKBETRIEBENE KOMMUNIKATIONSENDGERÄTE**
INPUT DEVICE FOR RADIO-OPERATED COMMUNICATIONS TERMINALS
DISPOSITIF D'ENTREE POUR TERMINAUX DE COMMUNICATION EXPLOITES PAR RADIO

(30) Priorität: 12.03.1997 DE 19710198
(43) Veröffentlichungstag der Anmeldung: 29.12.1999
(73) Patentinhaber: SIEMENS AKTIENGESELLSCHAFT, 80333 München (DE)
(72) Erfinder: CHRISTAL, Philip, D-85646 Anzing (DE); SCHNEIDER-HUFSCHMIDT, Matthias, D-80997 München (DE)
(86) Internationale Anmeldenummer: PCT/DE1998/000752
(87) Internationale Veröffentlichungsnummer: WO 1998/040997

(56) Entgegenhaltungen:
- EP-A- 0 685 953
- EP-A- 0 731 590
- DE-A- 4 244 468
- FR-A- 2 368 790
- CHRISTAL P: "GSM-"HANDY" MIT TOP-HANDLING" TELCOM REPORT, Bd. 16, Nr. 6, 1.November 1993, Seiten 332-335, XP000425543

## Beschreibung

Die vorliegende Erfindung bezieht sich auf eine Eingabevorrichtung für funkbetriebene Kommunikationsendgeräte mit Tasten, denen unterschiedliche Funktionen zugeordnet werden können, und einem Display, auf dem die jeweiligen den Tasten zugeordneten Funktionen angezeigt werden.

Das allgemeine Problem bei der Steuerung einer Vielzahl von Funktionen bei einem kleinen Produkt, wie z. B. einem Mobilfunkgerät, mit einer beschränkten Anzahl von Tasten ist allgemein bekannt. Zur Lösung dieses Problems sind Tasten bekannt, denen mehrere unterschiedliche Funktionen zugeordnet werden können, sogenannte "Softkeys", wobei auf dem Display die jeweiligen aktuellen Funktionen der Softkeys angezeigt werden. Dabei ist es bekannt, pro Gerät zwei Softkeys zu verwenden, was die Anwendung von 40 bis 50 Funktionen ermöglicht. Eine Belegung von Wipptasten mit fasten Funktionen ist auch in der DE-A-4 244 468 offenbart.

Dabei treten die folgenden Probleme auf. Es werden für jede Funktion lediglich maximal zwei Optionen angeboten, und bei z. B. einem Mobilfunkgerät ist kein Raum für weitere Softkeys vorhanden. Darüber hinaus fehlt auf dem Display der Platz, um eine geeignete Beschreibung der jeweiligen Funktion zu geben. Oft müssen diese Funktionen durch Text beschrieben werden, da es einem Benutzer nicht zugemutet werden kann, sich 40 bis 50 Icons zur Kennzeichnung der jeweiligen Funktionen zu merken. Dagegen werden in anderen Situationen mehrere Funktionen gebraucht, welche durchaus durch allgemein bekannte Icons beschrieben werden können.

Aufgabe der vorliegenden Erfindung ist es, eine Eingabevorrichtung der eingangs genannten Art anzugeben, bei der bestimmte Funktionen durch einen Text beschrieben werden können und allgemein bekannte Funktionen durch allgemein bekannte Icons angezeigt werden.

Diese Aufgabe wird für die eingangs genannte Eingabevorrichtung dadurch gelöst, daß die Tasten als Wipptasten ausgebildet sind, denen jeweils eine oder zwei Funktionen zugeordnet werden, wobei bei der Zuordnung von zwei Funktionen pro Wipptaste die Anzeige auf dem Display durch Icons erfolgt und bei der Zuordnung von einer Funktion pro Wipptaste die Anzeige auf dem Display mittels eines Textes erfolgt.

Erfindungsgemäß werden den als Wipptasten ausgebildeten Softkeys variabel ein oder zwei Funktionen zugeordnet. Dies bietet den Vorteil, daß für die meisten Standardsituationen lediglich zwei Softkeys beibehalten werden, daß aber eine zusätzliche Flexibilität darin besteht, bis zu vier Optionen vorzusehen, wenn die Notwendigkeit besteht.

Eine zweckmäßige Ausgestaltung der erfindungsgemäßen Eingabevorrichtung ist dadurch gekennzeichnet, daß jede Taste zumindest zwei elektrisch voneinander getrennte Kontakte aufweist, die wahlweise einzeln oder gemeinsam auf ihnen zugeordnete Gegenkontakte einwirken.

Durch eine derartige Gestaltung ist auf einfache Art und Weise jede Taste mit entweder einer oder zwei Funktionen zu belegen.

Die vorliegende Erfindung wird anhand eines in der Zeichnung dargestellten Ausführungsbeispiels näher beschrieben.

Es zeigen
Figur 1 ein Display mit zwei Wipptasten, wobei jeder Wipptaste jeweils zwei Funktionen zugeordnet sind,
Figur 2 ein Display und zwei Wipptasten, wobei jeder Wipptaste jeweils nur eine Funktion zugeordnet ist,
Figur 3 ein Display und zwei Wipptasten, wobei einer der Wipptasten eine Funktion und der anderen der Wipptasten zwei Funktionen zugeordnet sind,
Figur 4 schematisch eine Taste mit auf zwei Gegenkontakte einwirkenden Kontakten, und
Figuren 5 und 6 die Betätigungsmöglichkeiten der Taste nach Figur 4.

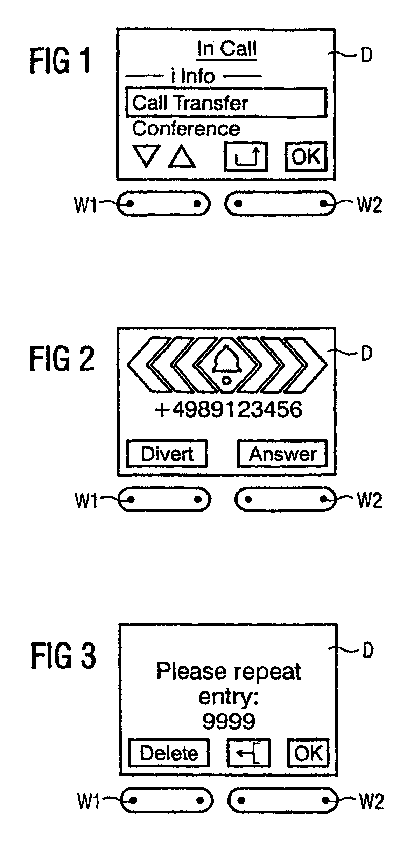

Es soll zuerst anhand der Figuren 1 bis 3 die Zuordnung der Funktionen zu den einzelnen Wipptasten näher erläutert werden.

Für allgemein bekannte Funktionen ist es möglich, diese Funktionen mittels Icons auf dem Display anzuzeigen, da diese allgemein bekannt sind. Ein derartiger Fall ist in Figur 1 dargestellt, in welcher den Wipptasten W1 und W2 jeweils zwei Funktionen zugeordnet sind, welche auf dem Display durch Icons angezeigt werden. In dem in Figur 1 dargestellten Fall sind z. B. der Wipptaste W1 die Funktionen "scroll up" und "scroll down" zugeordnet, während der Wipptaste W2 die Funktionen "delete" und "ok" zugeordnet sind.

Figur 2 zeigt den Fall, in welchem den einzelnen Wipptasten W1 und W2 lediglich eine Funktion zugeordnet ist. Das ist der Fall, wenn die Funktion ausgefallener ist und wegen der Benutzerfreundlichkeit nicht mehr durch ein Icon darstellbar ist. Bei dem in Figur 2 dargestellten Fall ist der Wipptaste W1 die Funktion "Divert" und der Wipptaste W2 die Funktion "Answer" zugeordnet.

Figur 3 zeigt den Fall einer gemischten Zuordnung, d. h. der Wipptaste W1 ist eine Funktion zugeordnet, während der Wipptaste W2 zwei Funktionen zugeordnet sind.

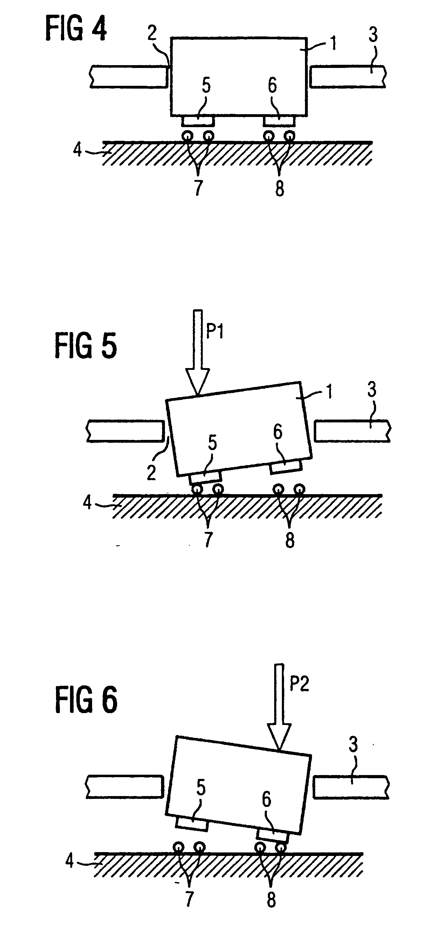

Die Figuren 4 bis 6 zeigen schematisch den Aufbau und die Funktion einer bei der erfindungsgemäßen Eingabevorrichtung verwendeten Wipptaste 1. Die Wipptaste 1 ist z. B. innerhalb eines Ausschnitts 2 eines Kommunikationsendgerätes 3 eines Kommunikationsendgerätegehäuses 3 gelagert. An ihrer einer hier schematisch dargestellten Leiterplatte 4 zugewandten Fläche ist die Wipptaste 1 mit streifenförmigen Kontaktflächen 5 und 6 versehen, die mit ihnen zugeordneten Gegenkontaktpaaren 7 und 8 auf der Leiterplatte zusammenwirken, so daß je nach Betätigen der Taste eine unterschiedliche Kontaktierung erzielbar ist.

Bei der in Figur 5 gezeigten Stellung der Wipptaste 1 wird durch Druck P1 auf den linken Tastenbereich eine elektrische Verbindung über die Kontaktfläche 5 zwischen dem Gegenkontaktpaar 7 hergestellt, wobei dem Gegenkontaktpaar 7 eine bestimmte Funktion zugeordnet ist.

Bei dem in Figur 6 dargestellten Schaltzustand der Wipptaste 1 wird durch Druck P2 auf den rechten Tastenbereich über die Kontaktfläche 6 das Gegenkontaktpaar 8 elektrisch miteinander verbunden, wobei dem Gegenkontaktpaar 8 eine bestimmte Funktion zugeordnet ist.

Für den Fall, daß der Wipptaste 1 jeweils nur eine Funktion zugeordnet werden soll, wird diese Funktion sowohl dem Gegenkontaktpaar 7 als auch dem Gegenkontaktpaar 8 zugeordnet.

## Patentansprüche

1. Eingabevorrichtung für funkbetriebene Kommunikationsendgeräte mit Tasten, denen unterschiedliche Funktionen zugeordnet werden können, und einem Display, auf dem die jeweiligen den Tasten zugeordneten Funktionen angezeigt werden, **dadurch gekennzeichnet, daß** die Tasten (W1, W2) als Wipptasten (1) ausgebildet sind, denen jeweils eine oder zwei Funktionen zugeordnet werden, wobei bei der Zuordnung von zwei Funktionen pro Wipptaste (W1, W2) die Anzeige auf dem Display (D) durch Icons erfolgt und bei der Zuordnung von einer Funktion pro Wipptaste (W1, W2) die Anzeige auf dem Display (D) mittels eines Textes erfolgt.

2. Eingabevorrichtung nach Anspruch 1, **dadurch gekennzeichnet, daß** jede Wipptaste (1) zumindest zwei elektrisch voneinander getrennte Kontakte (5, 6) aufweist, die wahlweise einzeln oder gemeinsam auf ihnen zugeordnete Gegenkontakte (7, 8) einwirken.

## Claims

1. Input device for radio-operated communications terminals having keys to which different functions can be assigned, and a display on which the respective functions assigned to the keys are presented, **characterized in that** the keys (W1, W2) take the form of rocker keys (1), to each of which one or two functions are assigned, whereby when two functions are assigned per rocker key (W1, W2) these functions are presented on the display (D) by means of icons and when one function is assigned per rocker key (W1, W2) the function is presented on the display (D) by means of a text.

2. Input device according to Claim 1, **characterized in that** each rocker key (1) has at least two contacts (5, 6) separated electrically from one another which optionally act individually or jointly on mating contacts (7, 8) assigned to them.

## Revendications

1. Dispositif d'entrée pour terminaux de communication exploités par radio, comportant des touches auxquelles peuvent être associées différentes fonctions et un écran de visualisation sur lequel sont affichées les fonctions respectives associées aux touches, **caractérisé en ce que** les touches (W1, W2) sont exécutées en tant que touches à bascule (1) auxquelles on associe à chaque fois une ou deux fonctions, l'affichage sur l'écran de visualisation (D) s'effectuant au moyen d'icônes lorsqu'on associe deux fonctions à chaque touche à bascule (W1, W2) et l'affichage sur l'écran de visualisation (D) s'effectuant au moyen de texte lorsqu'on associe une fonction à chaque touche à bascule (W1, W2).

2. Dispositif d'entrée selon la revendication 1, **caractérisé en ce que** chaque touche à bascule (1) est pourvue d'au moins deux contacts (5, 6) séparés l'un de l'autre électriquement qui agissent, optionnellement, seuls ou ensemble sur des contre-contacts (7, 8) qui leur sont associés.
